Europäisches Patentamt

European Patent Office

Office européen des brevets

(19)

(11) Numéro de publication: **0 223 667**
**B1**

(12) **FASCICULE DE BREVET EUROPEEN**

(45) Date de publication du fascicule du brevet:
**03.01.90**

(51) Int. Cl.⁴: **G01V 1/38**, G01V 1/00

(21) Numéro de dépôt: **86402318.9**

(22) Date de dépôt: **16.10.86**

(54) **Procédé de prospection sismique marine utilisant un signal vibratoire codé et dispositif pour sa mise en oeuvre.**

(30) Priorité: **30.10.85 FR 8516266**

(43) Date de publication de la demande:
**27.05.87 Bulletin 87/22**

(45) Mention de la délivrance du brevet:
**03.01.90 Bulletin 90/1**

(84) Etats contractants désignés:
**DE GB NL**

(56) Documents cités:
**US-A- 3 264 606**
**US-A- 3 413 596**

(73) Titulaire: **INSTITUT FRANCAIS DU PETROLE, 4, Avenue de Bois-Préau, F-92502 Rueil-Malmaison(FR)**

(72) Inventeur: **Becquey, Marc, 2 bis, rue de Maurepas, F-92500 Rueil Malmaison(FR)**

(74) Mandataire: **Kermarrec, Michelle et al, Institut Français du Pétrole 4, avenue de Bois-Préau, F-92502 Rueil-Malmaison(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un procédé de prospection sismique marine utilisant un ou plusieurs vibrateurs émettant des signaux à variation de phase.

On connaît des procédés de prospection sismique terrestre comportant la transmission dans le sol pendant plusieurs secondes, d'un signal vibratoire dont la fréquence varie de façon continue à l'intérieur d'une bande de fréquence, la réception par des capteurs des signaux réfléchis par des réflecteurs souterrains et l'enregistrement des signaux reçus. Du fait de la durée de l'émission, les signaux captés à chaque instant sont des combinaisons de signaux réfléchis par des réflecteurs situés à des profondeurs très différentes. L'image des différents réflecteurs du sous-sol ne peut être retrouvée que par un traitement des signaux captés comportant leur mise en corrélation avec les signaux émis. Le résultat du traitement est identique à celui obtenu en convoluant la fonction d'auto-corrélation du signal émis par la suite des coefficients de réflexion des différents réflecteurs. On obtient une trace sismique qui est l'image des interfaces entre les différentes couches géologiques à mi-distance entre les emplacements d'émission et de réception.

Un tel procédé est décrit, par exemple, dans le brevet US N, 2.688.124.

Ce procédé présente certains inconvénients. La fonction d'auto-corrélation qui est obtenue dans ce cas présente des pics secondaires de part et d'autre du pic principal, dont l'amplitude n'est pas négligeable. En outre, un intervalle de temps au moins égal à la durée de propagation aller et retour des ondes émises jusqu'au réflecteur le plus profond de la zone explorée que l'on désigne par "intervalle d'écoute" doit être ménagé entre deux séquences d'émission successives, de manière que les signaux forts captés au début de la séquence d'enregistrement correspondante, ne puissent venir masquer les signaux les plus faibles émanant de réflecteurs plus lointains, captés à la fin de la séquence d'enregistrement précédente. Les interruptions nécessaires de l'émission pendant un intervalle de temps d'écoute relativement important ont pour effet de limiter l'énergie transmise. Elles sont particulièrement gênantes en prospection sismique marine où, du fait de l'avancement continu du navire remorquant l'ensemble d'émission-réception, l'écart entre les positions successives où les séquences se produisent est important, ce qui limite la résolution spatiale des enregistrements.

On connaît aussi un autre procédé où, pour supprimer les intervalles de temps d'écoute, on fait alterner deux signaux obtenus par un balayage linéaire d'une même bande de fréquence, l'un dans le sens croissant, l'autre dans le sens décroissant. Il permet une émission et un enregistrement continus mais présente l'inconvénient de créer un "bruit" de corrélation important. Un tel procédé est décrit dans le brevet US-3.413.596.

D'autres procédés connus de prospection sismique terrestre comportent l'utilisation de sources vibratoires transmettant des signaux obtenus en modulant un signal porteur par un signal binaire ou code pseudo-aléatoire constitué d'une séquence d'éléments pouvant prendre deux valeurs logiques 0 ou 1. L'ordre de succession de ces valeurs est choisi de manière à présenter un caractère aléatoire. Un "1" logique laisse le signal sinusoïdal inchangé. Un "0" logique en inverse la phase.

Le code est du type à longueur maximale, c'est-à-dire que toute suite de n bits successifs ne peut se répéter à l'identique qu'après une séquence de $(2^n-1)$ bits. Le signal émis est constitué d'une suite de cycles identiques dont la durée est fixée par la fréquence du signal porteur et par le nombre de termes du code choisi. La durée du signal émis est choisie assez longue pour augmenter l'énergie transmise.

De tels procédés sont décrits, par exemple, dans les brevets US N, 3.234.504 ou 3.264.606.

Les procédés antérieurs sont adaptés à la prospection sismique terrestre où la source vibratoire est déplacée de manière discontinue d'un point à un autre d'une succession d'emplacements d'un plan de profil sismique à étudier.

La source sismique étant fixe durant chaque émission ou séquence d'émission, ainsi que les emplacements des réflecteurs souterrains renvoyant l'énergie qui est captée par les récepteurs, théoriquement aucune limite n'est imposée à la durée d'émission.

Le procédé selon l'invention est adapté à la prospection, sismique marine où les moyens d'émission et les récepteurs sont remorqués par un navire progressant de façon continue le long d'un profil sismique à étudier.

Il comporte l'émission par au moins une source vibratoire remorquée de séquences répétitives de vibrations acoustiques modulées de manière non répétitive durant chacune des séquences, la réception des ondes acoustiques renvoyées par les réflecteurs immergés, l'enregistrement des signaux acoustiques reçus et leur traitement pour déterminer la position des réflecteurs.

Il est caractérisé en ce que l'émission comporte une suite de séquences enchaînées constituées chacune d'un signal porteur périodique modulé en phase par un signal de codage binaire pseudo-aléatoire de longueur maximale, et en ce que le traitement des signaux acoustiques reçus comporte la corrélation des signaux reçus pendant un intervalle de temps égal à la durée de plusieurs séquences successives avec les signaux codés émis, de manière à obtenir des pics de corrélation à des intervalles de temps inférieurs ou au plus égaux à la période de répétition des séquences d'émission successives, ce qui permet, par un découpage du signal composite résultant de la corrélation, en parties de même longueur que chaque séquence, de se ramener à des traces correspondant à des tirs isolés régulièrement répartis, auxquelles on peut appliquer des traitements classiques de couverture multiple.

Suivant un premier mode de réalisation, la source vibratoire est unique, la corrélation est effectuée entre les signaux reçus et alternativement une séquence de signaux émis et la même séquence de signaux décalés dans le temps d'un intervalle inférieur à la période de répétition des séquences. On choisit par exemple un décalage égal à la demi-période de répétition des séquences de signaux émis.

Suivant un autre mode de réalisation, on utilise au moins deux sources vibratoires émettant simultanément, la suite des séquences de signaux émises par l'une des sources étant la même que celle émise par l'autre mais décalée dans le temps et on établit une corrélation entre les signaux reçus résultant des signaux émis simultanément par les sources et la séquence de signaux codés émise par l'une ou l'autre des deux sources vibratoires, de manière à obtenir en alternance des pics de corrélation correspondant à l'une ou l'autre des sources vibratoires.

Le procédé selon l'invention est avantageux en ce que :

- le bruit de corrélation est particulièrement faible, le rapport d'amplitude entre chaque pic principal de corrélation et ses pics secondaires étant égal au nombre de termes du code et ceci pendant pratiquement toute la durée du signal composite résultant de la corrélation, sauf sur une durée égale à la longueur de la séquence qui est négligeable compte-tenu de la durée assez longue des signaux reçus sélectionnés pour obtenir le signal composite ;
- l'émission et l'enregistrement sont effectués sans interruption. Il s'ensuit que la transmission d'énergie est optimale et que l'intervalle de temps entre les traces successives d'enregistrement peut être réduit au temps d'écoute ;
- la forme des pics de corrélation qui joue le même rôle que la signature d'une source impulsionnelle, est connue et répétitive, ce qui permet une meilleure efficacité de certains traitements, notamment de la couverture multiple ;
- le spectre de l'émission est mieux adapté que le balayage linéaire en fréquence des procédés antérieurs, aux possibilités de transmission des vibrateurs marins, généralement peu efficaces aux basses fréquences ;
- le caractère cyclique des codes pseudo-aléatoires et leurs possibilités de permutation qui seront expliquées plus loin, permettent, par des corrélations entre les enregistrements et des séquences décalées, d'obtenir des traces intermédiaires et ainsi améliorer la résolution spatiale du profil sismique restitué, l'intertrace pouvant être réduit à moins de la moitié de la distance parcourue par le navire pendant le temps d'écoute ; et
- l'utilisation d'au moins deux sources émettant simultanément des signaux obtenus avec des codes décalés, permet de séparer les enregistrements correspondant à chacune d'elles.

D'autres caractéristiques et avantages du procédé et celles d'un mode de réalisation d'un dispositif pour sa mise en œuvre, apparaîtront à la lecture de la description ci-après, en se référant aux dessins annexés où:

– la figure 1 représente schématiquement un ensemble d'émission-réception sismique remorqué par un navire;

– la figure 2 représente schématiquement un dispositif pour engendrer un code pseudo-aléatoire;
– la figure 3 montre un exemple d'un signal de codage pseudo-aléatoire;
– la figure 4 montre un signal sinusoïdal porteur modulé en phase par le signal de codage de la figure 3;
– les figures 5 et 6 représentent respectivement, de façon schématique, une séquence de signal modulé et la fonction de corrélation obtenue lorsque des interruptions sont ménagées entre les cycles d'émission successifs;
– les figures 7 et 8 représentent respectivement deux séquences d'émission décalées l'une par rapport à l'autre d'une demi-période, utilisées pour la corrélation avec les signaux reçus;
– les figures 9 et 10 représentent respectivement la disposition des pics de corrélation principaux obtenus en utilisant les deux séquences décalées;
– la figure 11 représente des signaux captés en réponse à l'émission simultanée par deux sources de séquences de signaux décalées les unes par rapport aux autres;
– la figure 12 représente une séquence de signaux émis avec laquelle les signaux reçus représentés à la figure 11, sont corrélés;
– la figure 13 représente la succession de pics de corrélation résultant de cette corrélation; et
– la figure 14 représente le schéma synoptique d'un dispositif pour la mise en œuvre du procédé.

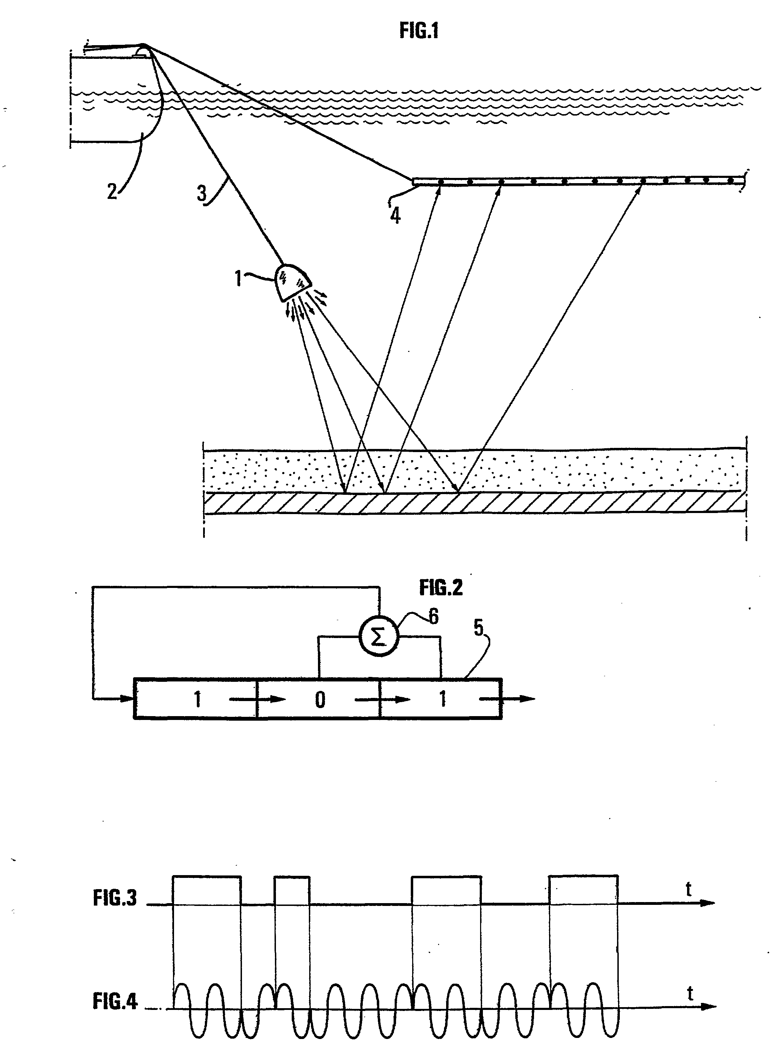

Le dispositif d'émission-réception comporte (Fig. 1) une ou plusieurs sources vibratoires 1 d'un type connu, des vibrateurs hydrauliques par exemple, remorquées en immersion par un navire 2 à l'extrémité d'un câble d'alimentation 3. Chaque source peut comporter plusieurs transducteurs vibrant en phase. Il comporte aussi un ensemble de réception tel qu'une flûte sismique, remorqué également en immersion. La source 1 est alimentée par un signal constitué d'une suite de cycles d'émission identiques, chacun d'eux étant constitué d'un signal sinusoïdal codé. Les signaux de codage utilisés pour la modulation sont de préférence des séquences binaires de longueur maximale.

Une séquence binaire de longueur maximale est un ensemble de $(2^n - 1)$ "mots" binaires pouvant être formés à partir de n bits. Ces mots binaires sont engendrés en utilisant (Fig. 2) des registres à décalage linéaire (LSR)5 à n bits pouvant prendre chacun deux états logiques 1 ou 0. Dans l'exemple de la figure 2 où n est égal à 3, un sommateur 6 fait la somme des deux bits de poids fort et l'applique à l'entrée du registre 5 en provoquant un décalage de son contenu. Le registre étant initialisé à une valeur quelconque différente de zéro, 101 par exemple, on voit que par des sommations et décalages successifs, il affiche 7 mots distincts, cette séquence se reproduisant à l'identique en continuant le même processus. Le bit de poids faible du registre va afficher successivement toutes les valeurs binaires de la séquence 1110010 etc.

Les séquences binaires à longueur maximale ont les propriétés suivantes :

– le nombre 1 des mots binaires est approximativement égal au nombre de 0 ;

– le découpage des mots binaires en segments contenant des bits de valeur identique, montre que la moitié d'entre eux ne contient qu'un élément, le quart en contient 2, le huitième en contient 3, etc. ;

– la fonction d'auto-corrélation des mots binaires présente un pic à l'origine et décroît très vite au-delà.

Ces propriétés sont très proches de celles d'une séquence purement aléatoire.

Une telle séquence dite pseudo-aléatoire dont un exemple particulier est représenté à la figure 3, est utilisée pour coder un signal sinusoïdal (Fig. 4). La phase du signal est inversée chaque fois que l'on passe d'une valeur binaire à celle qui la suit dans la séquence de codage. L'inversion se fait aux instants successifs où l'élongation du mouvement vibratoire est nulle pour que la source vibratoire puisse suivre le mouvement imposé et par conséquent chaque bit de la séquence doit coder un multiple de la demi-période du signal sinusoïdal.

On montre, et ceci est particulièrement important, que le rapport de l'amplitude de chaque pic principal de la fonction de corrélation à celle des pics secondaires qui l'encadrent est égal au nombre d'éléments de la séquence de codage.

La séquence de codage constituée à partir d'un registre à 8 bits aura 255 éléments. Si on utilise une telle séquence pour moduler un signal porteur de 51Hz, la durée de chaque cycle vibratoire sera de 10 secondes et le rapport de l'amplitude de chaque pic principal à celle des pics secondaires correspondants sera égal à 54dB.

Avec un tel rapport, les pics principaux de corrélation associés aux signaux réfléchis faibles reçus à la fin d'un cycle d'enregistrement ne sont pas masqués par les pics secondaires associés aux signaux forts reçus au début du cycle suivant, si la profondeur d'investigation n'est pas trop grande. L'émission et l'enregistrement peuvent être effectués de manière continue.

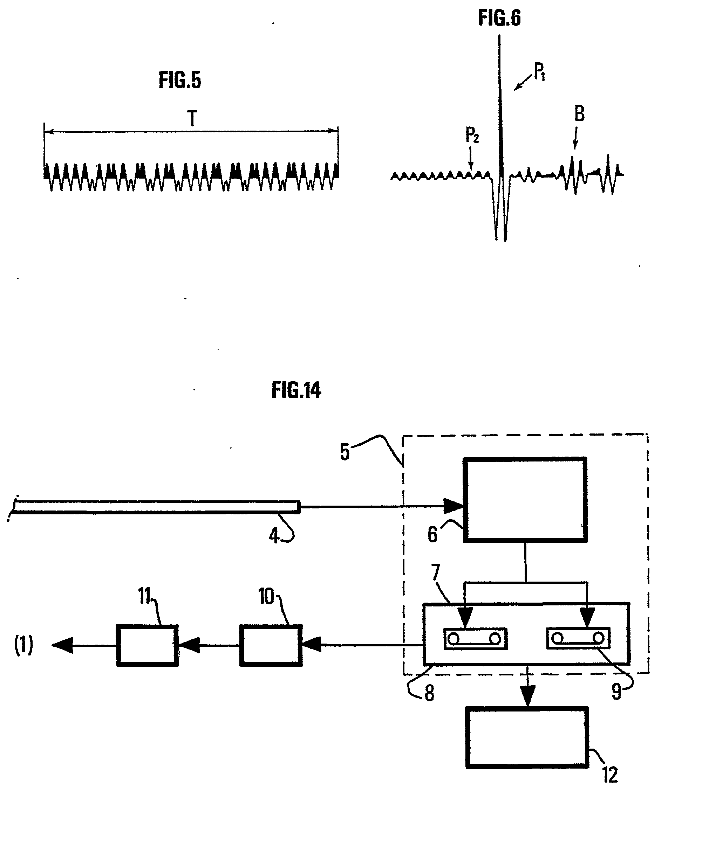

A la figure 5 est représenté schématiquement un signal sinusoïdal porteur modulé par un code pseudo-aléatoire de 31 termes. Le rapport de l'amplitude d'un pic principal $P_1$ de la fonction de corrélation correspondante (Fig. 6), aux pics secondaires $P_2$ (bruit de corrélation) est égal à 31 lorsque l'émission a lieu sans interruption.

On voit sur la partie B de la figure 6 le relèvement du bruit de corrélation que provoque une interruption de l'émission et de l'enregistrement pendant la durée d'un cycle et par conséquent la dégradation du rapport de l'amplitude de chaque pic principal au "bruit" de corrélation qui en résulte. Cet exemple justifie l'intérêt de l'émission et de l'enregistrement ininterrompus rendus possibles du fait à la fois de l'avancement continu du navire et de l'ensemble d'émission-réception le long du profil, et de l'utilisation du codage pseudo-aléatoire.

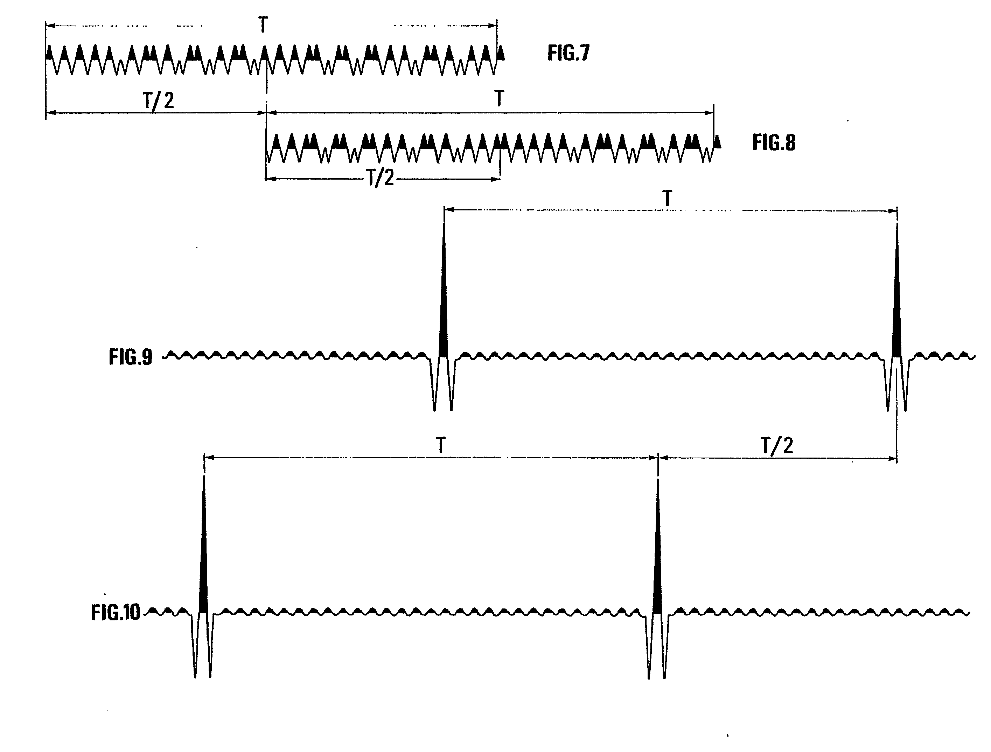

Suivant un mode de réalisation du procédé, on établit une corrélation des signaux reçus avec deux séquences de signaux émis de durée T (Figs. 7, 8), qui sont déductibles l'une de l'autre par un décalage de temps. On utilise les propriétés des codes pseudo-aléatoires suivant lesquelles deux séquences formées à partir d'un même code, en effectuant une permutation circulaire dans l'ordre de ses termes, ont les mêmes propriétés. Dans l'exemple représenté, les deux séquences sont codées par des codes à 31 termes décalés l'un par rapport à l'autre de 15 termes. On voit que la fonction de corrélation obtenue avec la première séquence (Fig. 9) comporte des pics principaux dont la période de répétition est T. Celle obtenue avec l'autre séquence (Fig. 10) comporte également une série de pics principaux se succédant avec la période T. Mais les deux séries obtenues sont décalées l'une par rapport à l'autre d'un intervalle de temps qui dépend de l'écart entre les deux séquences codées utilisées. La série résultante est représentée à la figure 10. Dans l'exemple représenté, l'écart est égal à T/2. Bien que l'information contenue dans les deux pics intermédiaires ne soit pas indépendante de celle contenue dans les deux pics voisins de la série résultante, le dédoublement des pics permet d'obtenir des résultats analogues aux opérations de mixage réalisées de façon classique par recouvrement des positions successives du dispositif d'émission-réception.

L'exemple ci-dessus, où le décalage entre les séquences de signaux choisies pour effectuer la corrélation est égal à la demi-période T/2, n'est pas limitatif. D'une manière plus générale, on choisit le décalage de manière que l'intervalle de temps entre pics de la série résultante soit inférieur ou égal à la durée "d'écoute", c'est-à-dire à l'intervalle de temps de propagation maximale des ondes acoustiques dans toute la zone explorée.

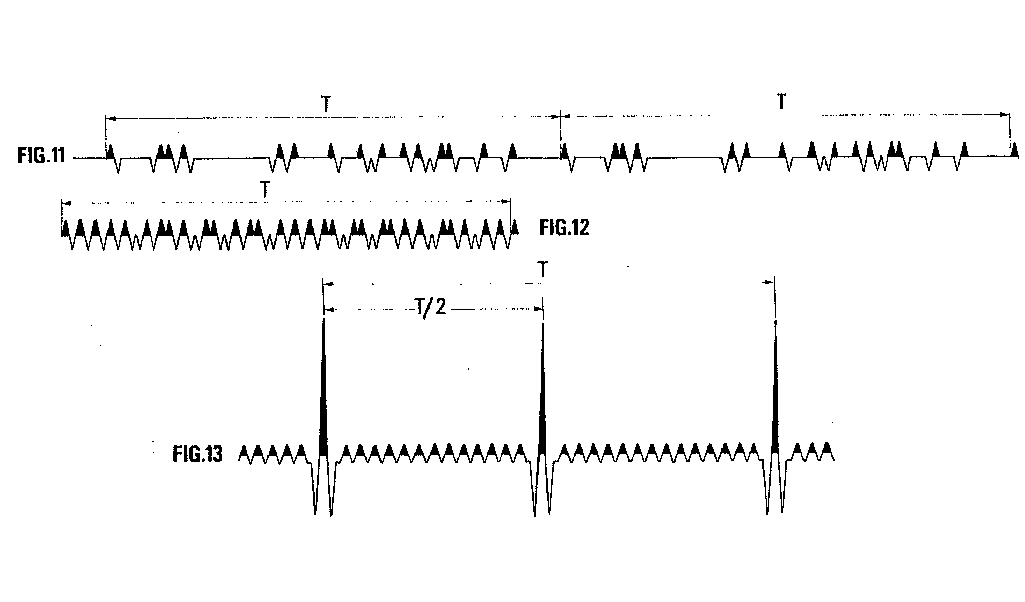

Suivant un autre mode de réalisation, on utilise deux sources vibratoires remorquées par le même navire et déportées latéralement de part et d'autre de sa trajectoire. Les deux sources sont alimentées simultanément par deux signaux vibratoires codés obtenus en modulant un même signal sinusoïdal par deux séquences pseudo-aléatoires qui se déduisent l'une de l'autre par un décalage de temps ou une permutation circulaire de leurs termes. Le signal résultant (Fig. 11) reçu par l'ensemble de réception est la somme de deux signaux codés analogues au signal représenté à la figure 12 et décalés par exemple d'une demi-période T.

On établit une corrélation entre le signal résultant et la séquence transmise par l'une des deux sources. On obtient une série résultante de pics de corrélation dont l'espacement est égal encore à T/2 (Fig. 13) qui contiennent alternativement des informations associées à l'une des sources et à l'autre. Si la durée du cycle de vibrations est au moins égale à deux fois le temps d'écoute, on peut ainsi séparer au cours de l'étape de corrélation, les données associées respectivement aux deux sources, bien qu'elles fonctionnent simultanément.

L'espace entre les traces correspond à l'avancement du navire pendant la durée du cycle vibratoire mais on peut là aussi réintroduire des traces intermédiaires sur chacun des profils sismiques restitués en corrélant les enregistrements par la séquence émise alternativement par l'un et l'autre vibrateurs.

Le procédé peut être généralisé à plusieurs vibrateurs et trouver des applications dans le domaine de la prospection sismique en bande large où le navire remorque deux vibrateurs déportés latéralement de quelques dizaines de mètres, de part et d'autre de la flûte sismique d'enregistrement, ou bien encore dans le domaine de la prospection sismique à trois dimensions.

Le dispositif de mise en oeuvre du procédé est associé à un système central 5 de commande et d'enregistrement adapté à collecter séquentiellement toutes les données sismiques recueillies par la flûte sismique (Fig. 1) et comportent un ensemble de commande 6 et un ensemble d'enregistrement 7 comportant au moins deux enregistreurs à bande 8, 9 adaptés à enregistrer en alternance les données multiplexées transmises à l'ensemble de commande. Un tel système est décrit par exemple dans le brevet français N, 2.471.088 relatif à une flûte sismique multiplexée. Le dispositif comporte également un générateur de signaux pseudo-aléatoires 10 qui délivre ses signaux, d'une part, à un organe de commande 11 de la source vibratoire 1 et, d'autre part, à l'ensemble d'enregistrement 7. Chaque enregistreur 8 ou 9 enregistre les signaux émis et reçus au cours d'une série m de cycles d'émission-réception successifs. L'alternance des enregistrements s'effectue avec un recouvrement d'un cycle, c'est-à-dire que le dernier cycle d'une série est enregistré par les deux enregistreurs.

Les données enregistrées seront appliquées dans une étape ultérieure à un calculateur 12 adapté à reconstituer les traces sismiques obtenues le long du profil exploré puis sont corrélées avec les séquences pseudo-aléatoires émises, en accord avec le procédé selon l'invention. Les corrélations sont effectuées par le calculateur convenablement programmé à cet effet.

## Revendications

1. Procédé de prospection sismique marine comportant l'émission par au moins une source vibratoire remorquée par un navire se déplaçant de façon continue dans un plan de profil à étudier, d'une suite de séquences enchaînées de vibrations acoustiques modulées de manière non répétitive durant chacune desdites séquences lesquelles sont constituées chacune d'un signal porteur périodique modulé en phase par un signal de codage binaire pseudo-aléatoire, la réception des ondes acoustiques renvoyées par les réflecteurs, l'enregistrement des signaux acoustiques reçus et leur traitement pour déterminer la position desdits réflecteurs, caractérisé en ce que le traitement des signaux acoustiques reçus comporte la corrélation des signaux reçus pendant une durée égale à celle de plusieurs séquences successives avec une seule séquence de signaux codés, de manière à obtenir des pics de corrélation à des intervalles de temps inférieurs ou égaux à la période de répétition des séquences d'émission successives.

2. Procédé selon la revendication 1, caractérisé en ce que l'on utilise une seule source vibratoire, la mise en corrélation étant effectuée entre les signaux reçus et alternativement la séquence de signaux émise et la même séquence décalée dans le temps d'un intervalle inférieur à la période de répétition de la séquence émise.

3. Procédé selon la revendication 1, caractérisé en ce que l'on utilise au moins deux sources vibratoires émettant simultanément, la suite de séquences de signaux émise par l'une des sources étant la même que celle émise par l'autre, mais décalée dans le temps et en ce que l'on établit une corrélation entre les signaux reçus résultant des émissions simultanées des deux sources, et la séquence de signaux codés émise par l'une ou l'autre des deux sources vibratoires, de manière à obtenir en alternance des pics de corrélation correspondant à la première et à la seconde sources vibratoires.

4. Procédé selon la revendication 2, caractérisé en ce que les deux séquences utilisées pour la corrélation sont décalées l'une par rapport à l'autre d'un intervalle de temps inférieur à la durée maximale de propagation des ondes acoustiques dans la zone à explorer.

5. Procédé selon la revendication 2, caractérisé en ce que le décalage de temps entre les deux séquences utilisées pour la corrélation est égal à le demi-période de répétition des séquences de signaux émis.

6. Procédé selon la revendication 1, caractérisé en ce que l'on utilise au moins deux sources vibratoires émettant simultanément, la suite de séquences de signaux émise par l'une des sources étant la même que celle émise par l'autre, mais décalée dans le temps et en ce que l'on établit une corrélation entre les signaux reçus résultant des émissions simultanées des deux sources, et altnernativement, la séquence de signaux codés émise par l'une ou l'autre de deux sources vibratoires, de manière à obtenir en alternance des pics de corrélation correspondant à la première et à la seconde sources vibratoires.

7. Dispositif pour la mise en œuvre du procédé selon la revendication 1 comportant des moyens pour engendrer des vibrations dans l'eau, un système central (5) de commande et d'enregistrement des données sismiques collectées par un dispositif de réception (4) du type à transmission multiplexée, un générateur de signaux codés (10) dont les signaux sont appliqués aux moyens pour engendrer des vibrations (5) et des moyens de traitement (12) pour établir des corrélations entre les signaux engendrés par le générateur de signaux codés et les signaux reçus enregistrés par le système central, caractérisé en ce que le système central de commande et d'enregistrement (5) comprte deux enregistreurs (8, 9) qui enregistrent chacun les signaux reçus correspondant à un nombre prédéterminé de séquences, une fraction des signaux reçus étant enregistrée à la fois sur les deux enregistreurs.

8. Dispositif selon la revendication 7, caractérisé en ce que les moyens pour engendrer des vibrations comportent deux vibrateurs déportés latéralement par rapport à la trajectoire du navire.

## Patentansprüche

1. Verfahren zur seismischen Prospektion im Meer, das umfaßt: Abgeben vermittels wenigstens einer Schwingungsquelle, die von einem Fahrzeug geschleppt wird, das sich kontinuierlich in einer zu untersuchenden Profilebene bewegt, von einer Folge verketteter Sequenzen akustischer Schwingungen, die in sich nicht wiederholender Weise während jeder dieser Sequenzen moduliert sind, wobei diese jeweils durch ein periodisches Trägersignal, das durch ein pseudo-zufälliges binäres Kodierungssignal phasenmoduliert ist, gebildet sind; Empfangen der durch die Reflektoren zurückgesandten akustischen Wellen; Aufzeichnen der empfangenen akustischen Signale und deren Verarbeitung zur Bestimmung der Position dieser Reflektoren, dadurch gekennzeichnet, daß die Verarbeitung der empfangenen akustischen Signale die Korrelation der Signale umfaßt, die während einer Zeitdauer empfangen wurden, die gleich der mehrerer aufeinanderfolgender Sequenzen bei einer einzigen Sequenz kodierter Signale ist, derart, daß Korrelationspeaks unter Zeitintervallen erhalten werden, die kleiner oder gleich der Folgeperiode der aufeinanderfolgenden Emissions- oder Abgabesequenzen sind.

2. Verfahren nach Anspruch 1, dadurch gekennzeichnet, daß man eine einzige Schwingungsquelle verwendet, wobei das In-Korrelation-Setzen vorgenommen wird, zwischen den empfangenen Signalen und alternativ der abgegebenen Signalsequenz und der gleichen Sequenz, die zeitlich um ein Intervall versetzt ist, das kleiner als die Folgeperiode der ausgesandten oder abgegebenen Frequenz ist.

3. Verfahren nach Anspruch 1, dadurch gekennzeichnet, daß man wenigstens zwei gleichzeitig aussendende Schwingungsquellen verwendet, wobei die durch eine der Quellen ausgesandte Frequenzsignalfolge die gleiche wie die durch die andere ausgesandte, jedoch zeitversetzt, ist, und daß man eine Korrelation zwischen den empfangenen Signalen herstellt, welche aus gleichzeitigen Emissionen der beiden Quellen sowie der Sequenz kodierter Signale stammen die durch die eine oder andere der beiden Schwingungsquellen abgegeben wurde, derart, daß eine Wechselfolge der Korrelationspeaks erhalten wird, die der ersten und zweiten Schwingungsquelle entspricht.

4. Verfahren nach Anspruch 2, dadurch gekennzeichnet, daß die beiden für die Korrelation verwendeten Sequenzen bezüglich einander um ein Zeitintervall versetzt sind, das kleiner als die maximale Fortpflanzungsdauer der akustischen Wellen in der zu explorierenden Zone ist.

5. Verfahren nach Anspruch 2, dadurch gekennzeichnet, daß die zeitliche Versetzung zwischen den beiden für die Korrelation verwendeten Sequenzen gleich der halben Folgeperiode der abgegebenen Signalsequenzen ist.

6. Verfahren nach Anspruch 1, dadurch gekennzeichnet, daß man wenigstens zwei gleichzeitig aussendende Schwingungsquellen verwendet, wobei die Folge von durch eine der Quellen ausgesandten Signalsequenzen die gleiche wie die durch die andere ausgesandte, jedoch zeitlich versetzt, ist und daß man eine Korrelation zwischen den empfangenen aus den gleichzeitigen Abgaben der beiden Quellen stammenden Signale und alternativ der Sequenz der kodierten Signale herstellt, welche durch die eine oder andere der beiden Schwingungsquellen abgegeben wurde, derart, daß man abwechselnd Korrelationspeaks entsprechend der ersten und zweiten Schwingungsquelle erhält.

7. Vorrichtung zur Durchführung des Verfahrens nach Anspruch 1 umfassend: Einrichtungen zur Erzeugung von Schwingungen im Wasser; ein zentrales Steuer- und Aufzeichnungssystem (5) für seismische durch eine Empfangsvorrichtung (4) vom Typ mit multiplexierter Übertragung gesammelten seismischen Daten; einen Erzeuger für kodierte Signale (10), dessen Signale an die Einrichtungen zur Erzeugung der Schwingungen (5) gelegt sind; und Verarbeitungseinrichtungen (12) zur Herstellung der Korrelationen zwischen den vom Generator für kodierte Signale erzeugten Signalen und den vom zentralen System empfangenen aufgezeichneten Signalen, dadurch gekennzeichnet, daß das zentrale Steuer- und Aufzeichnungssystem (5) zwei Aufzeichner (8, 9) umfaßt, die je die empfangenen Signale aufzeichnen, die einer bestimmten Anzahl von Sequenzen entsprechen, wobei eine Fraktion der empfangenen Signale gleichzeitig auf den beiden Aufzeichnern aufgezeichnet ist.

8. Vorrichtung nach Anspruch 7, dadurch gekennzeichnet, daß die Mittel zur Erzeugung der Schwingungen zwei Vibratoren umfassen, die, bezogen auf die Bahn des Schiffes, seitlich versetzt sind.

## Claims

1. A method of marine seismic prospecting comprising the transmission by at least one vibratory source towed by a ship moving continuously in a profile plane to be studied of a series of linked sequences of acoustic vibrations modulated in a non-repetitive manner during each of said sequences which are each constituted by a periodic carrier signal phasemodulated by a pseudo-random binary coding signal, the reception of the acoustic waves returned by the reflectors, the recording of the acoustic signals received and the processing of these to determine the position of said reflectors, characterized in that the processing of the acoustic signals received comprises the correlation of the signals received during a time equal to that of a plurality of successive sequences with a single sequence of coded signals so as to obtain correlation peaks at intervals of time less than or equal to the period of repetition of the successive transmission sequences.

2. A method as in claim 1, characterized in that a single vibratory source is used, the correlation being carried out between the signals received and alternatively the sequence of signals transmitted and the same sequence offset in time by an interval less than the period of repetition of the sequence transmitted.

3. A method as in claim 1, characterized in that at least two vibratory sources are used transmitting simultaneously, the series of sequences of signals transmitted by one of the sources being the same as that transmitted by the other but offset in time, and in that a correlation is established between the signals received resulting from the simultaneous transmissions from the two sources and the sequence of coded signals transmitted by one or other of the two vibratory sources so as to alternately obtain correlation peaks corresponding to the first and to the second vibratory source.

4. A method as in claim 2, characterized in that the two sequences used for the correlation are offset in relation to one another by an interval of time less than the maximum propagation time of the acoustic waves in the zone to be explored.

5. A method as in claim 2, characterized in that the offset in time between the two sequences used for the correlation is equal to half the period of repetition of the sequences of signals transmitted.

6. A method as in claim 1, characterized in that at least two vibratory sources are used transmitting simultaneously, the series of sequences of signals transmitted by one of the sources being the same as that transmitted by the other but offset in time, and in that a correlation is established between the signals received resulting from the simultaneous transmissions from the two sources and alternatively the sequence of coded signals transmitted by one or other of the two vibratory sources so as to alternately obtain correlation peaks corresponding to the first and to the second vibratory source.

7. A device for implementing the method as in claim 1 comprising means for generating vibrations in the water, a central system (5) for control and recording of the seismic data collected by a receiving device (4) of the multiplexed transmission type, a generator of coded signals (10) the signals of which are applied to the means for generating vibrations (5), and processing means (12) to establish correlations between the signals generated by the generator of coded signals and the signals received recorded by the central system, characterized in that the central control and recording system (5) comprises two recorders (8, 9) which each record the signals received corresponding to a pre-determined number of sequences, a fraction of the signals received being recorded at the same time on the two recorders.

8. A device as in claim 7, characterized in that the means for generating vibrations comprise two vibrators offset laterally in relation to the path of the ship.

## FIG.1

2

3

4

1

## FIG.2

6

5

Σ

1   →   0   →   1

FIG.3 _____→ t

FIG.4 _____→ t

**FIG.5**

**FIG.6**

**FIG.14**

FIG.7

T/2

T

FIG.8

T/2

FIG.9

T

FIG.10

T

T/2

EP 0 223 667 B1

FIG.11

FIG.12

FIG.13

EP 0 223 667 B1